# EUROPEAN PATENT APPLICATION

(11) **EP 4 672 811 A1**
(43) Date of publication of application: **31.12.2025**
(21) Application number: 24760048.9
(22) Date of filing: 29.01.2024
(51) Int. Cl.: H04W 28/06, H04B 7/024, H04W 52/04, H04W 84/12

(54) **COMMUNICATION DEVICE, INFORMATION PROCESSING DEVICE, CONTROL METHOD, AND PROGRAM**

(30) Priority: 22.02.2023 JP 2023026646
(71) Applicant: Canon Kabushiki Kaisha, Tokyo, 146-8501 (JP)
(72) Inventor: YOSHIKAWA Yuki, Tokyo 146-8501 (JP)
(74) Representative: Canon Europe Limited
(86) International application number: PCT/JP2024/002632
(87) International publication number: WO 2024/176741

(57) **Abstract**

A communication device that performs wireless communication that complies with IEEE 802.11 series of standards includes a communication means that cooperates with an access point to perform data communication with a station, and the communication means transmits, to the access point, a frame instructing the access point to communicate with the station, the frame including information for identifying the access point and information regarding transmission power.

## Description

### Technical Field

The present invention relates to a device that performs communication control.

### Background Art

In recent years, the increasing amount of data to be communicated has prompted the development of communication technologies such as wireless local area networks (LANs). The Institute of Electrical and Electronics Engineers (IEEE) 802.11 series of standards is known as the primary set of communication standards for wireless LAN. IEEE stands for the Institute of Electrical and Electronics Engineers. The IEEE 802.11 series of standards includes standards, such as IEEE 802.11a, b, g, n, ac, ax, and be (PTL 1).

For example, in the IEEE 802.11be standard, Multi-Link communication is being studied, in which a single access point (AP) establishes multiple links with a single station (STA) over different multiple frequency channels and communicates concurrently. Two or more links may be selected from the same frequency band (the 2.4 GHz band, the 3.6 GHz band, the 4.9 and 5 GHz band, and the 6 GHz band) or from different respective frequency bands. APs and STAs that support Multi-Link are called AP Multi-Link Devices (MLDs) and STA MLDs.

In addition, in the successor standard to IEEE 802.11be, methods to improve usability using Multi-Link are under study.

An example is distributed multi-user multi-output (MIMO) technology based on a technique called MIMO, which uses multiple transmission and reception antennas at the same time and in the same channel. In distributed MIMO, in an environment where multiple APs and multiple STAs are present, information about the communication state and the state of each AP is shared among the APs, and data is sent from the APs to the STAs at the same timing. Throughput is expected to increase because multiple APs can increase the number of spatial streams by performing cooperative transmission, compared to the case of a single AP.

Another example is a technique called cooperative beamforming. When an AP transmits data to an STA present in a basic service set (BSS), the AP uses an antenna pattern with high antenna gain in the direction toward the STA to which the AP wants to send the data and low antenna gain in the directions toward STAs present in the BSSs of other APs. Interference between the BSSs can be reduced by multiple APs setting antenna patterns, adjusting transmission power, and performing scheduling on the basis of environmental information such as the locations of STAs.

Such a communication technology in which multiple APs cooperatively operate is called multi-AP communication, and the APs are classified into a single Coordinator AP that manages all APs and Coordinated APs that operate under the management of the Coordinator AP.

### Citation List

### Patent Literature

PTL 1: Japanese Patent Laid-Open No. 2018-50133

### Summary of Invention

### Technical Problem

As mentioned above, in a case where multiple APs cooperate to perform data communication with STAs, it is necessary to communicate between each AP and the corresponding STA at appropriate transmission power. If each AP or an STA connected thereto transmits radio waves at the transmission power set by themselves, radio interference could reduce communication speed.

In light of the above-described issues, an object of the present invention is to provide methods that enable communication at appropriate transmit power even in a case where multiple APs cooperate to communicate with STAs. Solution to Problem

In order to achieve the above-described object, a communication device according to an aspect of the present invention is a communication device that performs wireless communication that complies with IEEE 802.11 series of standards, including: a communication means that cooperates with an access point to perform data communication with a station, and the communication means transmits, to the access point, a frame instructing the access point to communicate with the station, the frame including information for identifying the access point and information regarding transmission power.

### Advantageous Effects of Invention

Even in a case where multiple APs cooperate to communicate with STAs, it is possible to have them communicate at appropriate transmission powers.

### Brief Description of Drawings

[Fig. 1] Fig. 1 is a diagram illustrating the configuration of a network according to the present invention.
[Fig. 2] Fig. 2 is a diagram illustrating a hardware configuration of a communication device according to the present invention.
[Fig. 3] Fig. 3 is a diagram illustrating a functional configuration of the communication device according to the present invention.
[Fig. 4] Fig. 4 is a flowchart diagram illustrating a process performed by a communication device 100 according to the present invention.
[Fig. 5] Fig. 5 is a flowchart diagram illustrating a process performed by communication devices 104 to 106 according to the present invention.
[Fig. 6] Fig. 6 is a sequence diagram illustrating data transmission performed by the communication device 100 and communication devices 104 to 106 according to the present invention.
[Fig. 7] Fig. 7 is a flowchart diagram illustrating a process performed by the communication device 100 according to the present invention.
[Fig. 8] Fig. 8 is a flowchart diagram illustrating a process performed by the communication devices 104 to 106 according to the present invention.
[Fig. 9] Fig. 9 is a sequence diagram illustrating a process performed by the communication device 100 and communication devices 104 to 106 according to the present invention.
[Fig. 10] Fig. 10 is a diagram illustrating an example of a trigger frame transmitted from the communication device 100 to the communication devices 104 to 106 in Example 1.
[Fig. 11] Fig. 11 is a diagram illustrating an example of a trigger frame transmitted from the communication device 100 to the communication devices 104 to 106 in Example 2. Description of Embodiments

In the following, embodiments of the present invention will be described in detail with reference to the accompanying drawings. Note that the configurations illustrated in the following embodiments are only examples, and the present invention is not limited to the illustrated configurations.

### (Configuration of Wireless Communication System)

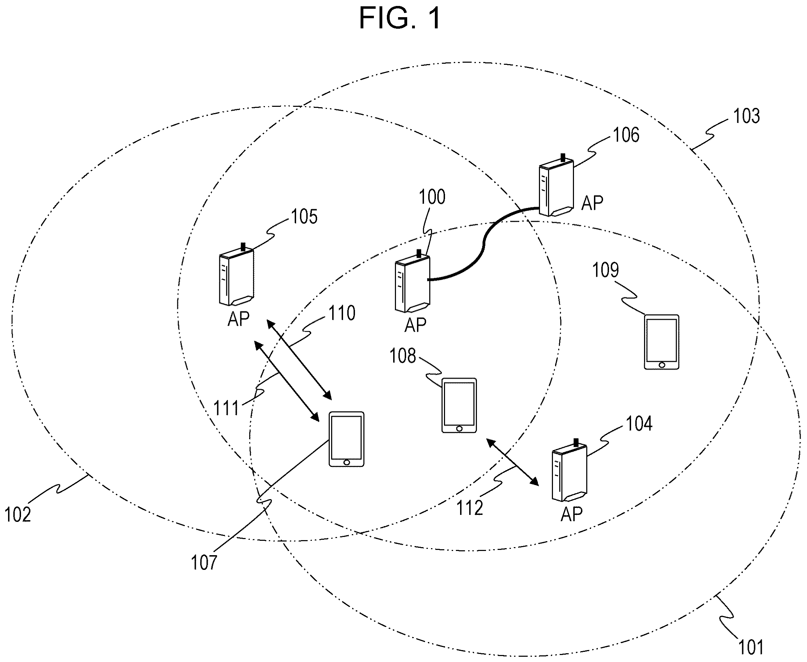

Fig. 1 illustrates the configuration of a network in which a communication device 100 (hereinafter referred to as AP 100) according to the present embodiment participates. Communication devices 107 and 108 (hereafter referred to as STA 107 and STA 108) are stations (STAs) that have the role of participating in networks 101, 102, and 103. A communication device 109 (hereinafter referred to as STA 109) is an STA that has the role of participating in the networks 101 and 103. A communication device 104 (hereinafter referred to as AP 104) is an access point (AP) that has the role of establishing the wireless network 101. A communication device 105 (hereinafter referred to as AP 105) is an AP that has the role of establishing the wireless network 102. A communication device 106 (hereinafter referred to as AP 106) is an AP that has the role of establishing the wireless network 103. The AP 100 is an AP that functions as a Coordinator AP and can communicate with the APs 104 to 106.

Each of the AP 100, APs 104 to 106, and STAs 107 to 109 is configured to be able to perform wireless frame communication that complies with the successor standard, which targets a maximum transmission rate of 90 Gbps to 100 Gbps or higher, to the IEEE 802.11be standard, which targets a maximum transmission rate of 46.08 Gbps. Note that IEEE stands for Institute of Electrical and Electronics Engineers.

This successor standard to 802.11be has, as its main features, support for reliable and low-latency communication and AP cooperation. Based on the above, the successor standard, which targets a maximum transmission speed of 90 Gbps to 100 Gbps or higher, to IEEE 802.11be will also be referred to as IEEE 802.11 Ultra High Reliability (UHR) in the present embodiment. Wireless frames for communication under the successor standard are also referred to as UHR PPDUs. PPDU stands for PLCP Protocol Data Unit, and PLCP stands for Physical Layer Convergence Protocol.

The names, IEEE 802.11 UHR and the UHR standard, are established for convenience based on the goals to be achieved in the successor standard and the features that will be the main focus of the standard, and may become different names once the standard has been finalized. In contrast, note that this specification and the appended claims are essentially applicable to any successor standard to the 802.11be standard that may support a feature in which multiple APs cooperate to perform processing for data communication with STAs.

Each communication device can communicate in the 2.4 Hz band, the 3.6 GHz band, the 5 GHz band, and the 6 GHz band, as well as in the 45 GHz band and the 60 GHz band, which are referred to as millimeter waves. The frequency bands used by the individual communication devices are not limited to these. The individual communication devices may use different frequency bands, for example, the Sub-1 GHz band. The AP 100, APs 104 to 106, and STAs 107 to 109, for example, can communicate using bandwidths of 20 MHz, 40 MHz, 80 MHz, 160 MHz, 320 MHz, 540 MHz, 640 MHz, 1080 MHz, and 2160 MHz. The bandwidths used by the individual communication devices are not limited to these. The individual communication devices may use different bandwidths, for example, 240 MHz and 4 MHz.

The AP 100, APs 104 to 106, and STAs 107 to 109 can realize multi-user (MU, Multi User) communication in which signals of multiple users are multiplexed by performing OFDMA communication that complies with the IEEE 802.11 standard. OFDMA stands for Orthogonal Frequency Division Multiple Access. In OFDMA communication, a portion of the divided frequency band, called a Resource Unit (RU), is assigned to each STA so that the carrier signals of individual STAs do not overlap, and the carrier waves of the individual STAs travel straight. Thus, the APs can communicate with multiple STAs concurrently within the specified bandwidth.

Although each communication device is assumed to support the IEEE 802.11 UHR standard, each communication device may also support legacy standards that predate the IEEE 802.11 UHR standard. Specifically, each communication device may support at least one of the IEEE 802.11a, b, g, n, ac, ax, and be standards. In addition to the IEEE 802.11 series of standards, each communication device may support other communication standards such as Bluetooth (registered trademark), NFC, UWB, ZigBee, and MBOA. Note that UWB stands for Ultra-Wide Band, and MBOA stands for MultiBand OFDM Alliance. NFC stands for Near Field Communication. UWB includes wireless USB, wireless 1394, and WiNET, for example. Moreover, each communication device may support communication standards for wired communication, such as wired LAN. Specific examples of the AP 100 and APs 104 to 106 include, but are not limited to, wireless LAN routers and personal computers (PCs). The AP 100 and APs 104 to 106 may be information processing devices such as wireless chips that can perform wireless communication that complies with the IEEE 802.11 UHR standard. Specific examples of the STAs 107 to 109 include, but are not limited to, cameras, tablets, smartphones, PCs, cell phones, video cameras, and headsets. The STAs 107 to 109 may be information processing devices such as wireless chips that can perform wireless communication that complies with the IEEE 802.11 UHR standard. The wireless network in Fig. 1 is constituted by four APs and three STAs, but the number and arrangement of APs and STAs is not limited to this.

In the present embodiment, in a case where multiple networks are built with one unit each of the APs 104 to 106, all BSSIDs of the networks are assumed to be different. BSSID stands for Basic Service Set Identifier and is an identifier used to identify networks. Alternatively, it is assumed that all BSS Colors are different. BSS Color stands for Basic Service Set color and is an ID used to identify a BSS, which integrates multiple BSSIDs. Assume that the SSIDs indicated by the AP 100 and APs 104 to 106 in the respective networks are all the same. Note that SSID stands for Service Set Identifier and is an identifier used to identify access points. In the present embodiment, the communication device 100 and APs 104 to 106 use one SSID in common, even when multiple connections are established.

The AP 100, APs 104 to 106, and STAs 107 to 109 may establish links over multiple frequency channels to perform Multi-Link communication. An AP that performs Multi-Link communication is also referred to as an AP Multi-Link Device (MLD). For example, the AP 105 can establish and communicate with the STA 107 via a link 110 over a first frequency channel in the 5 GHz band and also a second link 111 in the 6 GHz band. In this case, the STA 107 performs Multi-Link communication that maintains the second link 111 over a second frequency channel concurrently with the link 110 over the first frequency channel. In this manner, the AP 105 and the AP 107 can establish links with the STA 107 over multiple frequency channels to improve throughput in communication with the STA 107.

As the links between the individual communication devices, multiple links of different frequency bands may be established in Multi-Link communication. For example, the STA 107 may establish a third link in the 2.4 GHz band in addition to the link 110 in the 5 GHz band and the link 111 in the 6 GHz band with the AP 105. Alternatively, the links may be established over several different channels included in the same frequency band. For example, 36 ch in the 5 GHz band may be established as a first link with the AP 105. In addition to this, 161 ch in the 5 GHz band may be established as a second link with the AP 105. Note that links with the same frequency band and links with different frequency bands may be mixed. For example, the STA 107 may establish the link 110, which is 2 ch, in the 6 GHz band with the AP 105, and also a 35-ch link in the 6 GHz band with the AP 105 and a 6-ch link in the 2.4 GHz band with the AP 105. By establishing multiple connections of different frequencies with the STA 107, even when one band is congested, the AP 105 can establish communication with the STA 107 using another band. Thus, it is possible to prevent throughput degradation and communication delays when communicating with the STA 107.

Note that each link is assigned a Link ID for each network that establishes the link. For example, consider the case where the STA 107 participates in a network in the 5 GHz band among the networks established by the AP 100 and APs 104 to 106. When a link established with the AP 105 is denoted by 110, this link is assigned a common Link ID of 1. Similarly, when the STA 107 participates in a network in the 6 GHz band and a link established here is denoted by 111, this link is assigned a Link ID of 2. These values are examples, and another value may be assigned to each link. Alternatively, a Link ID may be assigned to each established link or STA.

In the IEEE 802.11 series of standards, the bandwidth of each frequency channel in the 2.4 GHz band, the 5 GHz band, and the 6 GHz band is defined as 20 MHz. Moreover, the bandwidth of each frequency channel in the 45 GHz band is defined as 540 MHz, and 1080 MHz or 2160 MHz in the 60 GHz band. A frequency channel in this case is a frequency channel defined in the IEEE 802.11 series of standards, and multiple frequency channels are defined for each of the 2.4 GHz band, the 5 GHz band, the 6 GHz band, the 45 GHz band, and the 60 GHz band. Note that a bandwidth of 40 MHz or more may be used in a single frequency channel by bonding adjacent frequency channels.

### (Configuration of AP and STA)

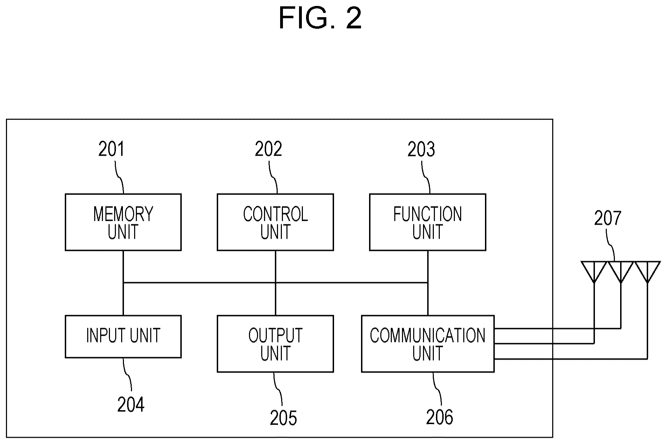

Fig. 2 illustrates an example of the hardware configuration of the AP 100 according to the present embodiment. The AP 100 includes a memory unit 201, a control unit 202, a function unit 203, an input unit 204, an output unit 205, a communication unit 206, and an antenna 207. There may be multiple antennas.

The memory unit 201 includes one or more memories such as a read-only memory (ROM) and a random access memory (RAM), and stores computer programs for performing various operations described below and various types of information, such as communication parameters for wireless communication. ROM stands for Read Only Memory, and RAM stands for Random Access Memory. Note that, as the memory unit 201, a storage medium such as a flexible disk, a hard disk, an optical disk, a magneto-optical disk, a CD-ROM, a CD-R, a magnetic tape, a non-volatile memory card, or a DVD may also be used other than memories such as a ROM and a RAM. The memory unit 201 may include, for example, multiple memories.

The control unit 202 includes, for example, one or more processors, such as a central processing unit (CPU) and a microprocessing unit (MPU), and controls the entire AP 100 by executing computer programs stored in the memory unit 201. The control unit 202 may control the entire AP 100 through cooperative execution of the programs and operating system (OS) stored in the memory unit 201. The control unit 202 also generates data and signals (radio frames) to be transmitted during communication with other communication devices. Note that CPU stands for Central Processing Unit, and MPU stands for Micro Processing Unit. The control unit 202 is equipped with multiple processors such as multi-core processors and may use the multiple processors to control the entire AP 100.

The control unit 202 also controls the function unit 203 to perform wireless communication and predetermined processes, such as image capturing, printing, and projection. The function unit 203 is hardware that enables the AP 100 to perform the predetermined processes. If the function unit is a printer, the image data acquired via the communication unit 206 is printed. If the function unit is a scanner, image data generated through scanning using the scanner is transmitted to an external device via the communication unit 206. Furthermore, if the function unit is a camera, image data obtained through image capturing using the camera is transmitted to an external device via the communication unit 206.

The input unit 204 accepts various operations from the user. For example, the input unit 204 is constituted by a touch panel, hard keys, buttons, etc.

The output unit 205 provides various outputs to the user through a monitor screen and speakers. In this case, outputs from the output unit 205 include display on the monitor screen, sound output through the speakers, vibration output, and the like. It is possible to realize both the input unit 204 and the output unit 205 in a single module, such as a touch panel. Each of the input unit 204 and output unit 205 and the AP 100 may be formed so as to be integrated with each other or may be separate from each other.

The communication unit 206 controls wireless communication that complies with the IEEE 802.11 UHR standard. The communication unit 206 may control wireless communication that complies with other IEEE 802.11 series of standards in addition to the IEEE 802.11 UHR standard, and may also control wired communication such as wired LAN. The communication unit 206 controls the antenna 207 to transmit and receive signals for wireless communication generated by the control unit 202.

In a case where the AP 100 supports, for example, NFC and Bluetooth standards in addition to the IEEE 802.11 UHR standard, the AP 100 may control wireless communication that compiles with these communication standards. In a case where the AP 100 is capable of performing wireless communication that compiles with multiple communication standards, the AP 100 may be configured to have communication units and antennas corresponding to the respective communication standards separately. The AP 100 exchanges data, such as image data, document data, video data, and other data, with each STA via the communication unit 206. The antenna 207 may be configured separately from the communication unit 206, or the antenna 207 and the communication unit 206 may be formed as a single integrated module.

The antenna 207 is an antenna capable of performing communication in the 2.4 GHz band, the 5 GHz band, the 6 GHz band, the 45 GHz band, and the 60 GHz band. In the present embodiment, the AP 100 is assumed to have two antennas but may have three antennas. Alternatively, the AP 100 may have different antennas for the respective frequency bands. In a case where the AP 100 has multiple antennas, the AP 100 may have communication units 206 corresponding to the respective antennas.

Note that the APs 104 to 106 and STAs 107 to 109 have substantially the same hardware configuration as the AP 100.

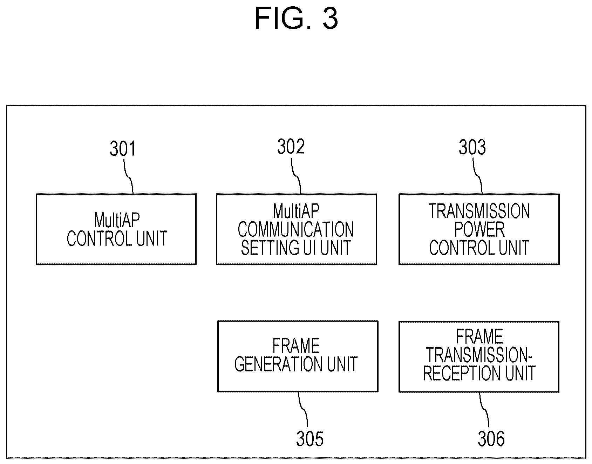

Fig. 3 is a block diagram of the functional configuration of the AP 100 according to the present embodiment. For example, this is a diagram of a functional configuration realized by one or more processors executing programs stored in one or more memories. Note that the APs 104 to 106 and the STAs 107 to 109 also have substantially the same configuration.

The AP 100 includes a MultiAP control unit 301, a MultiAP communication setting user interface (UI) unit 302, a transmission power control unit 303, a frame generation unit 305, and a frame transmission-reception unit 306.

The MultiAP control unit 301 is a function unit that controls group formation processing for the AP 100 to communicate wirelessly with other APs 104 to 106 in a cooperative manner, processing for adding and removing participating APs, and communication between APs.

The MultiAP communication setting user interface (UI) unit 302 is a function unit that provides a UI for a user to enter the MultiAP communication settings for the AP 100 from the operation screen of the AP 100. Note that the AP 100 itself does not need to have this function unit. For example, a server or another AP to which the AP 100 connects may have such a function unit and display a UI for the user to enter the settings of the AP 100.

In a case where a cooperative operation is performed between the APs in the group established by the MultiAP control unit 301, the transmission power control unit 303 manages transmission powers set by the respective APs at the time of transmission. Alternatively, the transmission power control unit 303 manages transmission powers presented by other APs.

The frame generation unit 305 is a function unit that generates frames for frame exchange for when communicating with the STA or other APs to which the AP 100 is connected.

The frame transmission-reception unit 306 transmits radio frames including a Probe Request frame and a data frame generated by the frame generation unit 305 and receives radio frames from peer devices.

### (Process Flow)

Subsequently, some embodiments will be described that include the flows of processes performed by the APs and STAs as described above and sequences in the wireless communication system.

### (Example 1)

In the present example, the AP 100 functions as a Coordinator AP, which is the main AP in control of configuration, operation, and management when cooperatively operating with other APs. The APs 104 to 106 function as Coordinated APs controlled by the Coordinator AP and communicate with the STAs 107 to 109 under instructions from the AP 100. Coordinator AP is sometimes referred to as Sharing AP because Coordinator AP shares wireless medium resources with other APs to perform cooperative operations. Similarly, Coordinated AP is sometimes referred to as Shared AP.

In the present example, a case will be described where data is to be transmitted from the AP 100 via the AP 104 and the AP 105 to the STA 107.

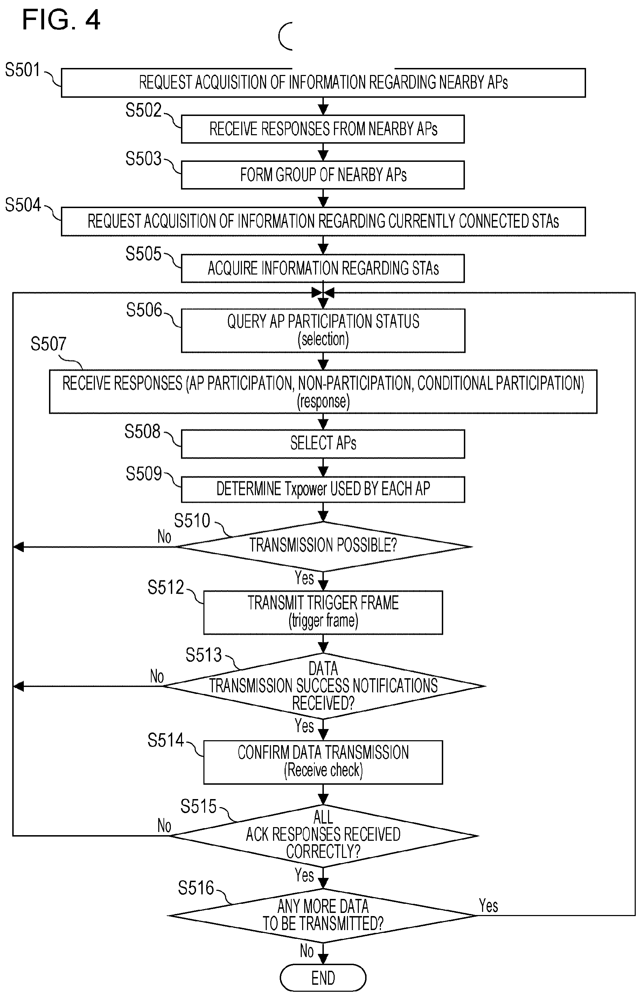

Fig. 4 illustrates a flowchart of an example of the process flow in a case where the AP 104 and the AP 105 transmit data to the STA 107 under instructions from the AP 100. Each process in the flowchart is performed by the individual function units illustrated in Fig. 3, and may be performed in a cooperative manner by multiple function units.

This process starts in a case where there is data to be transmitted from the AP 104 and the AP 105 to the STA 107. Note that this flowchart may be started when a connection between the AP 100 and the APs 104 and 105 and a connection between the STA 107 and the APs 104 and 105 are established. When the APs transmit data to the STA, the flowchart may start from S506.

The AP 100 first broadcasts a request to acquire information regarding nearby APs (S501). This request may include information indicating that nearby APs with the same SSID will respond in a case where the request is received. When receiving responses corresponding to the request broadcast in S501 from nearby APs (S502), the AP 100 forms a group to cooperate with the nearby APs on the basis of the responses (S503). In this case, assume that the AP 100 will receive responses from the APs 104 to 106 and form a group with the APs 104 to 106. Response information from nearby APs may include available channels, Multi-Link compatibility, BSSID information, the received signal strength (RSSI) and signal-to-noise ratio (SNR) of radio waves from the AP 100 as received by each Coordinated AP, IP addresses, MAC addresses, the capability values for HT, VHT, HE, EHT, and UHR, transmission rates for data transmission and reception, maximum allowable packet sizes, maximum numbers of STAs that can be connected, numbers of currently connected STAs, types of security standards that can be supported by currently connected STAs or APs, channels used by the currently connected STAs, data transmission and reception rates including Min-Max, and other information. In this example, communication between the APs is wireless but may also be wired.

Next, to the APs in the group formed in S503, the AP 100 transmits a request to acquire information regarding STAs that are currently connected (S504). In this case, the request may include an identifier indicating that information regarding the currently connected STAs is requested. Next, as responses to the request transmitted in S504, the AP 100 receives information regarding the currently connected STAs from the nearby APs (S505). The response information in this case may include the MAC addresses of the STAs, the channels and bandwidths used by the STAs, Multi-Link support statuses, the received signal strength (RSSI) and signal-to-noise ratio (SNR) for when communicating with each STA, IP addresses, the presence or absence of Power Save mode, and TIM values indicating how often Beacon is received, the capability values for HT, VHT, HE, EHT, and UHR, transmission rates for data transmission and reception including Min-Max, Association IDs (AIDs) assigned by the APs to the STAs, maximum allowable packet sizes, types of security standards used during connection, and other information.

Note that S501 and S504 may be performed simultaneously, and the reception processes in S502 and S505 may be performed simultaneously. Alternatively, the processes in S504 and S505 need not be performed.

Subsequently, the AP 100 transmits a frame to confirm whether or not each of the Coordinated APs (APs 104 to 106) can perform the following data transmission (S506). That is, in this case, the AP 100 queries whether or not the Coordinated AP can participate in data transmission to the STA. The frame transmitted in this case may include information regarding the amount of data and the period of time used for transmission. Next, the AP 100 receives responses from the Coordinated APs to the frame transmitted in S506 (S507). The frames received in this case may each include whether a corresponding one of the Coordinated APs can participate in data transmission and conditions under which the Coordinated AP can participate. The conditions under which the Coordinated AP can participate include the specification of a channel and a bandwidth available for data transmission.

The AP 100 determines Coordinated APs to be used in data transmission on the basis of the responses received in S507 (S508). At this time, a frame may be transmitted to the Coordinated APs to inform that the Coordinated APs are selected as APs for data transmission. In the present example, assume that the AP 104 and the AP 105 will participate in data transmission.

Next, the AP 100 determines a channel used by each of the Coordinated APs (the AP 104 and the AP 105) that will participate in data transmission. Furthermore, the AP 100 determines transmission power (Txpower) set in a case where each Coordinated AP performs frame transmission (S509). In S509, the transmission power of an Ack to be transmitted by the STA may be determined. Note that S508 and S509 may be performed simultaneously.

Once the Coordinated APs participating in data transmission and the transmission power at which each Coordinated AP transmits are determined, the AP 100 determines whether the Coordinated AP can transmit data to the STA in this state (S510). Note that the transmission power specified in this case may directly indicate the transmission power to be set by the Coordinated AP or may indicate the reception strength or reception sensitivity of radio waves that the Coordinator AP can be expected to receive when the Coordinated AP emits radio waves. In a case where the Coordinated AP is instructed regarding the reception strength or reception sensitivity, the Coordinated AP calculates its own power to be transmitted so that the Coordinator AP can receive radio waves at the indicated value, and transmits radio waves in accordance with the power value. For example, if there is no Coordinated AP that can participate in data transmission, no data can be transmitted from any Coordinated AP to the STA. Thus, after the amount of data is changed or the conditions are changed, the process starts over again from S506. In this case, the network system may be configured such that data is transmitted directly only from the AP 100 to the STA. Note that this determination may be made by the AP 100 on the basis of the responses from the Coordinated APs in S507. Moreover, the process in S509 may be performed before S506 is performed, and information regarding the determined transmission powers may be included in the query submitted in S506. In this case, the response information transmitted by the Coordinated APs in S507 may only be information regarding whether or not participation will be possible. This allows the Coordinator AP to immediately make a new channel assignment, for example, and can transmit a frame to the Coordinated APs to confirm again whether or not participation will be possible.

When ready to transmit data, the AP 100 transmits, to the Coordinated APs, a trigger frame that instructs the Coordinated APs to transmit data to the STA (S512). In the present example, the trigger frame is transmitted from the AP 100 to the AP 104 and the AP 105. Note that in a case where data is transmitted from the AP 100 to each STA, data may be transmitted between S510 and S512.

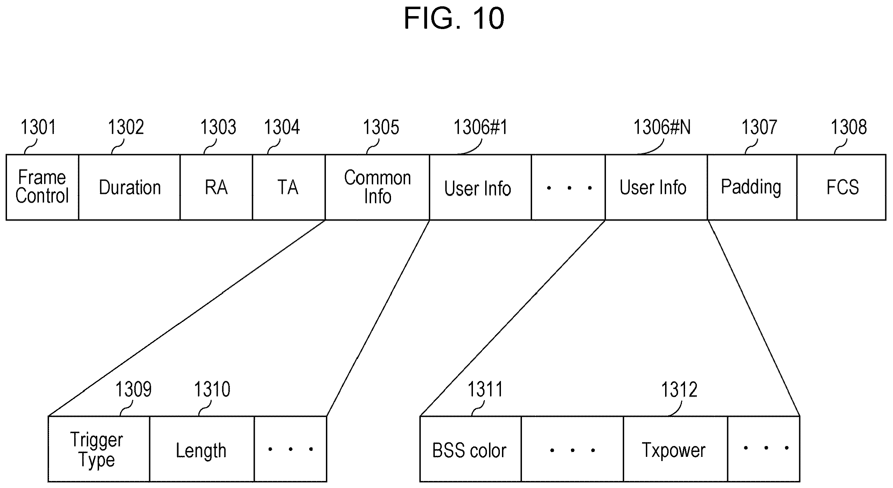

Fig. 10 illustrates an example of the trigger frame to be transmitted in this case. The fields/subfields illustrated in this case conform to the format specified in the IEEE 802.11ax. That is, the trigger frame includes, from the top, a Frame Control field 1301, a Duration field 1302, an RA field 1303, a TA field 1304, a Common Info field 1305, User Info fields 1306, a Padding field 1307, and an FCS field 1308. The Common Info field 1305 includes information common to multiple devices, and each User Info field 1306 includes information regarding a corresponding one of the multiple devices. A 4-bit Trigger Type subfield 1309 in the Common Info field 1305 specifies the type of trigger for the trigger frame. A Length subfield 1310 in the Common Info field 1305 represents a communication period common to all the Coordinated APs. The communication period corresponds to the amount of data that each Coordinated AP can transmit and receive. Table 1 illustrates an example of the correspondence between Trigger type subfield values and trigger types.

**[Table 1]**

| SUBFIELD VALUE | TRIGGER TYPE |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Multi-AP Group Formation Trigger Frame |
| 9 | Multi-AP Data transition |
| 10 | Multi-AP Data receive |
| 11-15 | reserved |

When the Trigger type subfield value is 9, it indicates that the trigger frame instructs Multi-AP data transmission where multiple APs cooperate to perform data communication.

The User Info fields 1306 are fields corresponding to the respective Coordinated APs. The User Info fields 1306, which are as many as the Coordinated APs, are concatenated and transmitted. Each User Info field 1306 includes a BSS Color field 1311 for setting a BSS Color value, and a Txpower field 1312 for setting a Txpower value. Note that the value set in the field 1311 is not limited to the BSS Color value but can be any value that can identify the AP, such as a BSSID, for example. The value given in the field 1311 makes it possible to specify which Coordinated AP the data from the Coordinator AP is for. BSS Color has 6 bits in size, and BSSID has 6 bytes in size. Into the Txpower field 1312, the transmission power value to be set by each Coordinated AP is input. The size is 1 byte. The Coordinated AP checks the BSS Color and Txpower and transmits data in accordance with the Txpower assigned thereto. For example, the AP 100 sets a BSS Color value of the AP 104 in the field 1311 of the first User Info field 1306 and includes information regarding the AP 104 in the fields subsequent to the field 1311. Furthermore, the AP 100 sets a BSS Color value of the AP 105 in the second User Info field 1306 and includes information regarding the AP 105 in the fields subsequent to the field 1311. As a result, each of the AP 104 and the AP 105 can be notified of information such as transmission power. In addition to Txpower, the User Info field 1306 may include RU allocation information and information regarding modulation and coding scheme (MCS), which indicates the modulation and coding method. In this case, the Coordinated AP determines the transmission power on the basis of the value included in the Txpower field 1312; however, the Coordinated AP may determine the transmission power on the basis of values included in fields other than the Txpower field 1312.

The description returns to that of Fig. 4. In S512, the AP 100 sets the Trigger type subfield value to 9 and generates and transmits a UHR PPDU including a trigger frame for multiple APs to perform data communication in a cooperative manner, namely Multi-AP data transmission. It is determined whether the AP 100 has received, from each Coordinated AP that was instructed to transmit data by the trigger frame transmitted in S512, a notification regarding whether the Coordinated AP was able to transmit data to the STA (S513). In a case where there is a Coordinated AP that failed to transmit data correctly, the AP 100 does not receive the notification in S513. The procedure returns to S506 to select APs again. In a case where the notification is received in S513, the AP 100 transmits, to the Coordinated AP, a frame for confirming whether the data was correctly transmitted to the STA (S514). From a frame returned from the Coordinated AP as a response to this confirmation, the AP 100 checks whether the Coordinated AP has received all Acks for the data transmitted from the Coordinated AP to the STA (S515). In a case where the Coordinated AP has successfully received the Acks, the process proceeds to S516. Otherwise, the process returns to S506. The Acks to be checked in this case are Acks for the data transmitted from the Coordinated AP to the target STA. Thus, it becomes possible to determine which data has been correctly delivered to the STA. Note that the processing from S513 to S515 does not always have to be performed.

The AP 100 checks whether each AP within the group holds data to be transmitted (S516). In a case where there is still data to be transmitted, the process is performed again from S506. Otherwise, the process ends. Note that in a case where the process is performed again, the process may be started from S508.

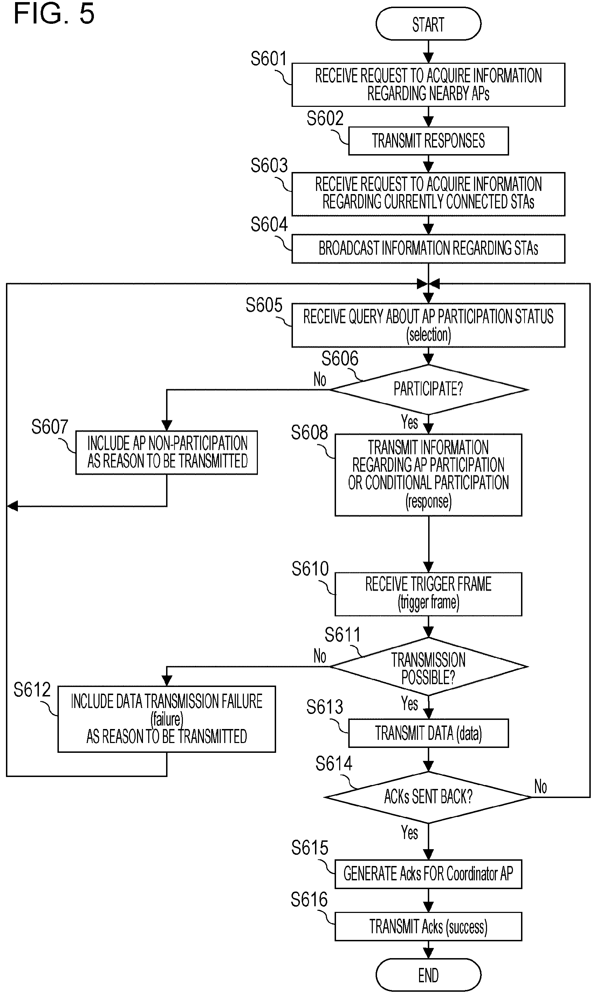

Fig. 5 illustrates a flowchart of an example of the flow of data transmission when the AP 104 and the AP 105 cooperate to transmit data to the STA 107 and the STA 108, respectively. Note that the information to be included in a frame is substantially the same as that described using Fig. 4 and is therefore omitted. Each process in the flowchart is performed by the individual function units illustrated in Fig. 3 and may be performed cooperatively by multiple function units.

The process in this flowchart starts when a request to acquire information regarding nearby APs (S501) is received from the AP 100.

The AP 104 and the AP 105 receive the request to acquire information regarding nearby APs from the AP 100 (S601). The AP 104 and the AP 105 transmit responses to the AP information acquisition request (S602). Information included in the responses has been described in the description for Fig. 4 and is thus omitted. Next, the AP 104 and the AP 105 receive a request to acquire information regarding currently connected STAs from the AP 100 (S603). In response to this, the AP 104 and the AP 105 return responses including information regarding the currently connected STAs (S604). Information included in the responses has been described in the description for Fig. 4 and is thus omitted.

Next, the AP 104 and the AP 105 receive, from the AP 100, a request to check whether there is data to be transmitted from the AP 104 and the AP 105 to the STA 107 and the STA 108, namely the query in S506 (S605). Note that the amount of data queue may be presented in S605. Upon receiving this request, the AP 104 and the AP 105, namely Coordinated APs, determine whether to participate in data transmission on the basis of the current communication status (S606). For example, in a case where there is no data to be transmitted, a response is transmitted indicating non-participation with REASON = NOQUEUE (S607). In the case of non-participation, no response need be sent. In a case where the AP 104 and the AP 105 participate in data communication in S606, the AP 104 and the AP 105 transmit responses indicating participation or conditional participation to the AP 100 (S608). The AP 104 and the AP 105 then receive, from the AP 100, a trigger frame indicating the timing for data transmission to the STA 107 and the STA 108 (S610). Note that in a case where data is transmitted from the AP 100 to each STA, each STA may receive transmission data in advance. In the trigger frame, the BSS Colors and transmission powers used by the AP 104 and the AP 105 are set. Thus, the AP 104 and the AP 105 can determine the transmission powers that have been assigned thereto and that are to be set.

Immediately after receiving the trigger frame, the AP 104 and the AP 105 check whether frames can be transmitted (S611). For example, it is conceivable that the transmission power specified in the trigger frame exceeds its maximum transmission power or that a Transmission Opportunity (TXOP) cannot be secured. In a case where frames cannot be transmitted, the Coordinator AP is notified of REASON indicating a failure (S612). In a case where it is determined in S611 that frames can be transmitted, the AP 104 and the AP 105 transmit data to the STAs at the specified transmission powers (S613). Specifically, the AP 104 and the AP 105 acquire information regarding the transmission powers included in the Txpower fields 1312 of the trigger frame received in S610, determine the transmission powers on the basis of the acquired information, and transmit data to the STAs (the STA 107 and the STA 108 in this case). The AP 104 and the AP 105 may be configured to determine an MCS on the basis of the transmission powers specified by the trigger frame received in S610 and transmit data to the STAs. For example, in a case where the transmission powers specified by the trigger frame are low, the MCS is lowered as appropriate to transmit data to the STAs. In a case where data is successfully transmitted to the STAs (S613), the AP 104 and the AP 105 wait for Acks transmitted from the STAs (S614).

In a case where Acks are sent back in S614, the AP 104 and the AP 105 transmit success notifications to the Coordinator AP (S615, S616). The process then ends. Note that in a case where data transmission continues, the process may restart from S605 or S610. In a case where Acks are not sent back in S614, the AP 104 and the AP 105 return to processing in S605. Alternatively, the AP 100 may be notified of an error, and the process may be terminated.

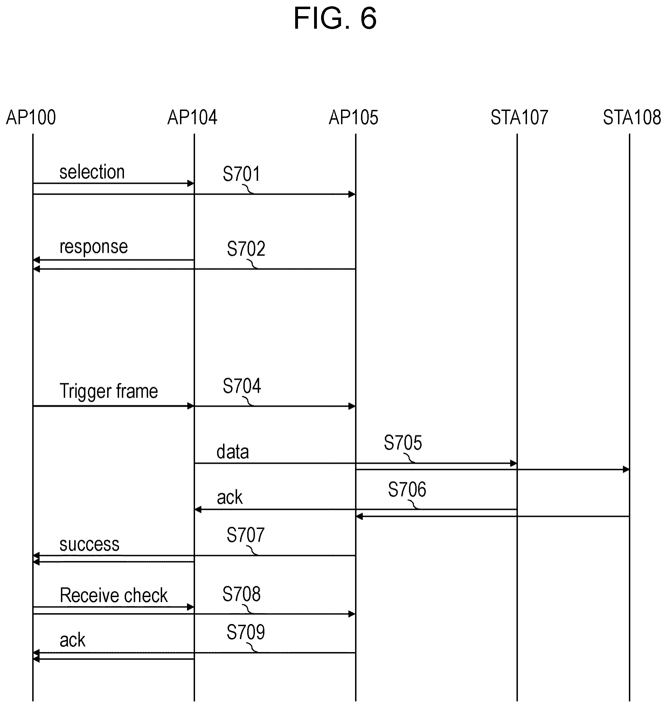

Fig. 6 illustrates a sequence diagram illustrating the process up to the point where the AP 104 and the AP 105, which are Coordinated APs, transmit data to the STA 107 and the STA 108 under the instruction of the AP 100, which is the Coordinator AP.

This sequence diagram starts at S506 in Fig. 4 and S605 in Fig. 5. First, a frame for querying whether participation in data transmission will be possible is transmitted from the AP 100 to the AP 104 and the AP 105 (S701). In response to this, the AP 104 and the AP 105, which are Coordinated APs, return responses to the AP 100 (S702). These responses include information as to whether or not participation in data transmission will be possible. In a case where participation in data transmission will be possible, each response may include information, such as a channel available for participation, link information, the maximum transmission power, a BSS Color, the presence or absence of transmission data, the amount of transmission data, and the type of access category. In a case where participation will be possible, information regarding a channel or link available for participation is included. In a case where participation will not be possible, a reason for non-participation may be included. Examples of the reason for non-participation include BUSY and DISCONNECTED. On the basis of these Responses, the AP 100 selects APs that are to participate in data transmission. The APs that are to participate in data transmission in this case are the AP 104 and the AP 105, which are Coordinated APs.

When data transmission is ready, the AP 100 transmits, to the AP 104 and the AP 105, a trigger frame indicating the timing for data transmission (S704). In response to this, the AP 104 and the AP 105 transmit data to the STA 107 and the STA 108, respectively (S705). The STA 107 and the STA 108 return Acks in response to the received data (S706). In a case where data is correctly transmitted, the AP 104 and the AP 105 return, to the AP 100, frames indicating successful data transmission (S707). In a case where the AP 104 and the AP 105 have not received all Acks or where time has elapsed, the AP 100 transmits, to the AP 104 and the AP 105, a message to check whether all data has been received (S708). When receiving this message, the AP 104 and the AP 105 return Acks indicating the current reception status (S709). At the timing for transmission in S707, the AP 104 and the AP 105 may send a transmission failure notification to the AP 100. S707 to S709 need not be performed.

In this manner, the AP 104 and the AP 105 can communicate with STAs at the appropriate transmission powers specified by the AP 100. Note that data is not limited to those transmitted from the AP 104 and the AP 105 but the AP 100 may also specify data itself that the AP 104 and the AP 105 are to transmit to STAs. In the present example, the AP 100 transmits the trigger frame as radio waves to the AP 104 and the AP 105 but may also transmit this in a wired manner. Similarly, in Fig. 4, all data communication may also be performed in a wired manner between the AP 100 and the AP 104 and AP 105. Moreover, according to Fig. 1, the AP 100 and the AP 106 are connected in a wired manner, and the AP 100 and the AP 104 are connected wirelessly. Data transmission may be performed similar to the present example, assuming that the AP 100 treats the AP 106 and the AP 104 as Coordinated APs to transmit data to the STA 107 and the STA 109.

The SSIDs and BSSIDs of the AP 100, AP 104, AP 105, and AP 106 operating cooperatively may be the same or different. In a case where the BSSIDs are the same, additional IDs are prepared to identify the AP 100 and the APs 104 to 106. In this case, the Coordinator AP uniquely manages, in advance, the IDs for identifying the respective APs that are cooperation targets. Each Coordinated AP also acquires its ID in advance and stores it as its own ID so that the Coordinated AP can identify the ID as being addressed thereto. In accordance with the present example, the multiple links 110 and 111 may be established simultaneously between the AP 105 and the STA 107.

In this manner, the AP 104 and the AP 105 can cooperatively adjust the transmission powers and transmit data to the STA 107 and the STA 108 simultaneously.

### (Example 2)

Example 2 describes a configuration in which Coordinated APs transmit data to STAs on the basis of instructions from a Coordinator AP. The present example describes a configuration in which Coordinated APs receive data from STAs on the basis of instructions from a Coordinator AP.

In the present example, the AP 100 functions as the Coordinator AP. The APs 104 and 106 function as Coordinated APs and communicate with the STAs 107 and 109 under instructions from the AP 100. In the present example, a case will be described where the APs 104 and 106 receive data from the STA 107 and the STA 109 under instructions from the AP 100. The basic configuration of the present example is the same as that of Example 1, and thus only differences will be illustrated.

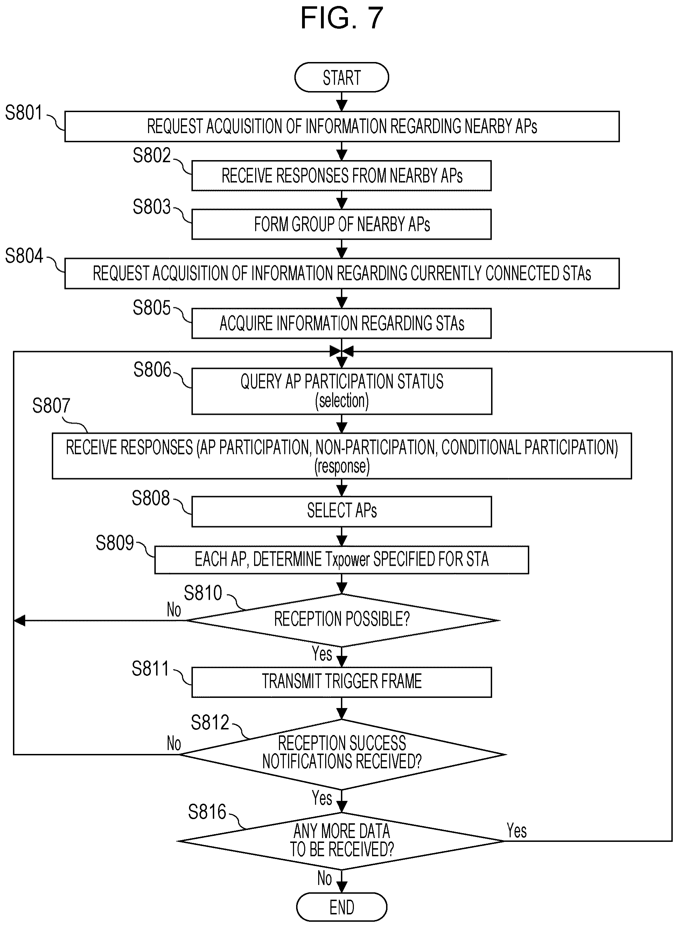

Fig. 7 illustrates a flowchart of an example of the process flow performed by the Coordinator AP when STAs transmit data to the respective APs.

This process starts in a case where the STA 107 and the STA 109 have data to be transmitted to the AP 104 and the AP 106. Note that this flowchart may be started when a connection between the AP 100 and the APs 104 and 106, a connection between the AP 104 and the STA 107, and a connection between the AP 106 and the STA 109 are established. In the case of data reception, the flowchart may start from S806. The description of portions overlapping with Example 1 is omitted.

S801 to S805 are substantially the same as S501 to S505 in Example 1, and thus the description will be omitted. The AP 100 transmits a frame to query whether or not each of the Coordinated APs can perform the following data reception (S806). This frame may include information regarding the amount of data and the period of time used for transmission. In a case where the Coordinator AP assigns an AID to each STA, the Coordinator AP may also transmit, to the Coordinated APs, information that links the MAC address of the STA to the ID assigned by the Coordinator AP. Next, the AP 100 receives responses from the Coordinated APs to the query submitted in S806 (S807). The response from each Coordinated AP may include whether or not the Coordinated AP will participate in data reception and conditions under which the Coordinated AP can participate. The conditions under which the Coordinated AP can participate include a channel and bandwidth available for data transmission and the maximum transmission power that the STA can output. Alternatively, the conditions may also include the SNR for each Coordinated AP acquired by the STA. Moreover, the conditions may also include the amount of data to be received in the future and the amount of data for each type of access category, which are received from the STA to which one or more corresponding Coordinated APs are connected. Note that the amounts of data are sent for each AID or MAC address of the STAs.

The AP 100 determines Coordinated APs to be used in data reception on the basis of the response information received from each Coordinated AP in S807 (S808). At this time, a frame may be transmitted to the Coordinated APs to inform that the Coordinated APs are selected as APs for data reception. In the present example, assume that the AP 104 and the AP 106 will participate in data reception.

Next, the AP 100 determines the transmission powers of the STAs in a case where each of the Coordinated APs (the AP 104 and the AP 106) receives data (S809). Note that the transmission power when a trigger frame or an Ack is transmitted by the Coordinated AP may be determined in this case. S808 and S809 may be performed simultaneously.

Once the Coordinated APs participating in data reception and the channel and RU used by each Coordinated AP are determined, the AP 100 determines whether the Coordinated APs can receive data in this state (S810). For example, if there is no Coordinated AP that can participate in data reception, no data can be received by Coordinated APs from the STAs. Thus, after the amount of data is changed or the conditions are changed, the process starts over again from S806. In this case, data may be received directly from the STAs only using the AP 100. Note that this determination may be made in S810 on the basis of the responses from the Coordinated APs in S807. The process in S809 may be performed before the process in S806 is performed. In this case, the information transmitted by each Coordinated AP in S807 may only be information regarding whether or not participation will be possible. This allows the Coordinator AP to immediately change the transmission powers to use, and can transmit a frame to the Coordinated APs to confirm again whether or not participation will be possible.

In a case where it is determined in S810 that data reception will be possible, a trigger frame for data transmission from the STAs to the Coordinated APs is transmitted (S811). This trigger frame is transmitted from the Coordinator AP to the Coordinated APs. In the present example, the trigger frame is transmitted from the AP 100 to the AP 104 and the AP 106.

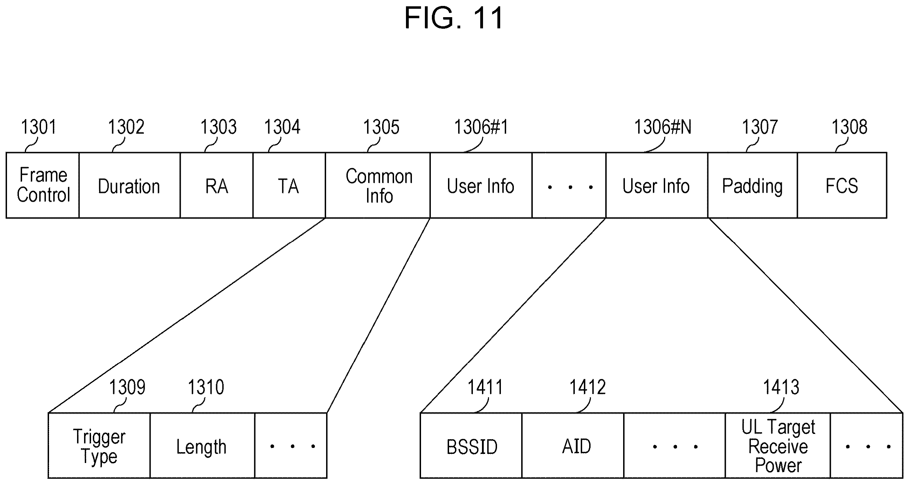

Fig. 11 illustrates the trigger frame transmitted in this case. Fields 1301 to 1310 are substantially the same as those described using Fig. 10, and thus the description will be omitted. Note that when the Trigger type subfield value is 10, the trigger frame indicates that Multi-AP data reception is to be performed.

In the present example, each User Info field 1306 includes a BSSID field 1411, an AID field 1412, and a UL Target Receive Power field 1413. The BSSID field 1411 indicates the BSSID of the Coordinated AP. Since the BSSID field 1411 is 6 bytes long, it may be a field indicating BSS Color as in Example 1. In this case, the size is 6 bits. Since it is sufficient to identify the APs, unique IDs assigned by the Coordinator AP may be used.

The AID field 1412 indicates an Association ID (AID) assigned when the AP is connected to the STA. The correspondence between the value of the AID field 1412 and its meaning is illustrated in Table 2.

**[Table 2]**

| AID FIELD | CONTENT |
|---|---|
| 0 | The resource unit (RU) is used for random access by the connected STA(s) |
| 1-2007 | The RUs are allocated to the currently connected STAs with matching AIDs |
| 2008-2044 | Reserved |
| 2045 | The RU is used for random access by one or more STAs that are not currently connected |
| 2046 | The RU is not allocated to STAs |
| 2047-4094 | Reserved |
| 4095 | The start of the padding field |

In the present example, the AID field 1412 uses AIDs assigned to the STAs to which the Coordinated APs are connected. Note that the Coordinator AP may assign an AID to each STA. For example, the Coordinator AP may assign an AID to each STA on the basis of the information regarding the STAs acquired from each Coordinated AP in S802. In a case where the value of the AID field is 1-2007, it is the value of the assigned AID.

The UL Target Receive Power field 1413 indicates the transmission power of the STA desired by the AP. Note that this definition complies with the definition of the fields included in the Trigger frame based on IEEE 802.11. This field specifies the reception strength or reception sensitivity of radio waves that the Coordinated AP receives when the STA transmits radio waves. The STA calculates its transmission power and transmits radio waves based on the calculation results so that the AP to which the STA is connected can receive radio waves at the specified reception strength or specified reception sensitivity. Note that the specified value may indicate the transmission power itself to be transmitted by the STA.

If the AIDs are assigned by the Coordinator AP and different AIDs can be assigned to different STAs even if the STAs are connected to different APs, the trigger frame transmitted from the Coordinator AP to the Coordinated APs may be a Basic trigger frame with Type = 0. The STA identified by the AID field 1412 determines the transmission power and transmits data on the basis of the value included in the corresponding field 1413.

The description returns to that of Fig. 7. In a case where the Coordinated APs can receive data from the STAs in accordance with the trigger frame transmitted in S811, the Coordinator AP receives data reception success notifications from the Coordinated APs (S812). Note that it is sufficient that this notification include information regarding whether data reception was successful or not. This notification may be sent only when data reception failed. This notification may include information regarding the amount of data the STA stored in the queue for each type of access category. Through the trigger frame and a frame involved in the trigger frame and transmitted from the STAs to the Coordinated APs, each Coordinated AP may check information regarding whether or not the corresponding STA further holds data to be transmitted. In this manner, the Coordinated AP may be configured to check whether there is still data to be transmitted at the STA and to notify the Coordinated AP of the check result. The Coordinator AP checks whether or not there is still data to be transmitted from the STAs by one of several methods (S816) and terminates the process if there is no data to be transmitted from the STAs. If there is data to be transmitted from the STAs, the process may be started again from S806 or S808.

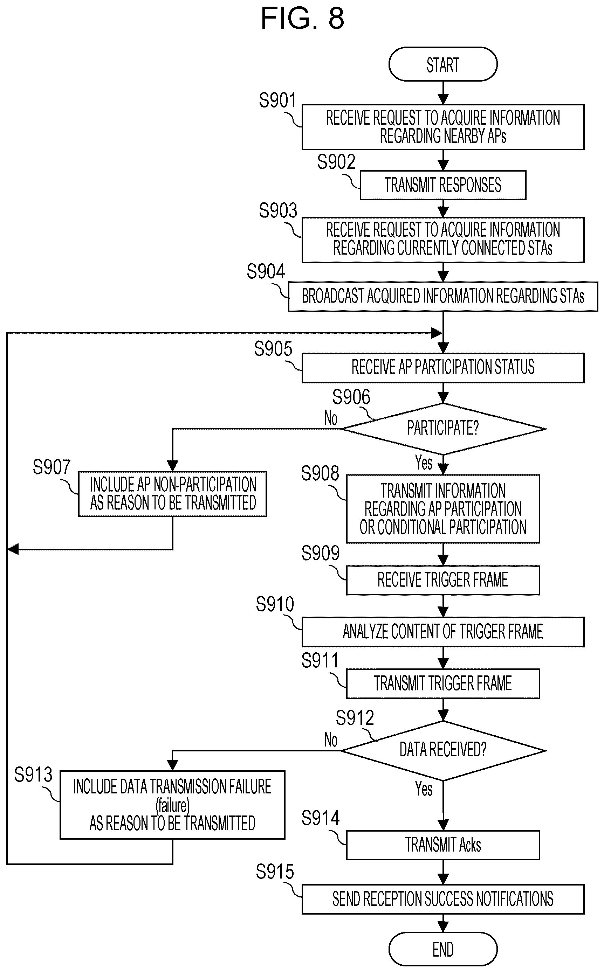

Fig. 8 illustrates a flowchart of an example of the flow of data reception when the AP 104 and the AP 106 cooperate to receive data from the STA 107 and the STA 109. Note that the information to be included in a frame is substantially the same as that described using Fig. 7 and is therefore omitted.

This process starts when a request to acquire information regarding nearby APs is received from the AP 100. S901 to S904 are similar to those in Fig. 5, and thus the description will be omitted. To prepare to receive data from the STAs 107 and 109, the AP 104 and the AP 106 receive, from the AP 100, a request to check whether to participate in data reception (S905). Before this request is made, the STAs 107 and 109 may query STAs connected thereto as to how much data to be transmitted is in their queues, so that the STAs grasp the amounts of data to be transmitted. In that case, it is desirable to be able to grasp the amount of data for each type of access category. Upon receiving the participation request from the Coordinator AP, each Coordinated AP determines whether to participate in data reception on the basis of the current communication status and the amount of data from the corresponding STA (S906). For example, in a case where there is no data to be received from the STA, a response is transmitted indicating non-participation with REASON = NOQUEUE (S907).

In the case of participation in S906, a response is transmitted to the AP 100 including channels available for participation, a link number, the maximum transmit power the STA can set, and the SNR obtained by the STA with respect to surrounding APs (S908). The AP 104 and the AP 106 notify the AP 100 that the AP 104 and the AP 106 will participate in data reception (S908). When selected as APs that receive data by the AP 100, the AP 104 and the AP 106 receive, from the AP 100, a trigger frame indicating the timing for data reception from the STAs 107 and 109 (S909). The trigger frame received at this time is as illustrated in Fig. 11. From the information included in this trigger frame, the AP 104 and the AP 106 can determine the transmission powers of the STAs that the AP 104 and the AP 106 specify. The AP 104 and the AP 106 analyze the link numbers, RUs, and transmission powers assigned in the trigger frame received from the AP 100 (S910). For example, if Link ID = 1, RU = 2, and expected reception power = -80 dBm, the STA adjusts the transmission power so that Link ID becomes 1, RU number becomes 2, and the received power of the Coordinated AP becomes -80 dBm. Note that the RU and transmission power may be specified in S911, not in S909. In a case where the transmission powers at which the AP transmits the trigger frame and Ack have been specified, S911 and S914 are performed in accordance with that value.

The AP 104 and the AP 106 analyze the trigger frame received from the Coordinator AP and then notifies the STAs of the specified content (the link numbers, RUs, transmission powers, and so forth) as it is (S911). The trigger frame is used to issue the notification in this case. For example, using the trigger frame, the STAs specified in the AID fields 1412 are notified of information regarding the transmission powers based on the values included in the fields 1413. The AP 104 and the AP 106 receive data from the STAs on the basis of the information regarding the trigger frame transmitted in S911 (S912). That is, each STA transmits data to the Coordinated AP at the transmission power specified by the Coordinator AP. In a case where data could not be received correctly from the STA, data including the reason (REASON) indicating that data reception has failed is transmitted to the Coordinator AP (S913). Thereafter, the process returns to S905.

In a case where data was successfully received from the STAs in S912, the AP 104 and the AP 106 transmit Acks (S914) and send data reception success notifications to the Coordinator AP (S915). Note that, in S915, the AP 104 and the AP 106 may send the amounts of data to be transmitted that the respective STAs connected thereto have in their queues. Alternatively, the AP 104 and the AP 106 may query the respective STAs for the amounts of data accumulated and send the responses to the Coordinator AP. The AP 104 and the AP 106 may transfer the data received from the STAs in S912 to the Coordinator AP.

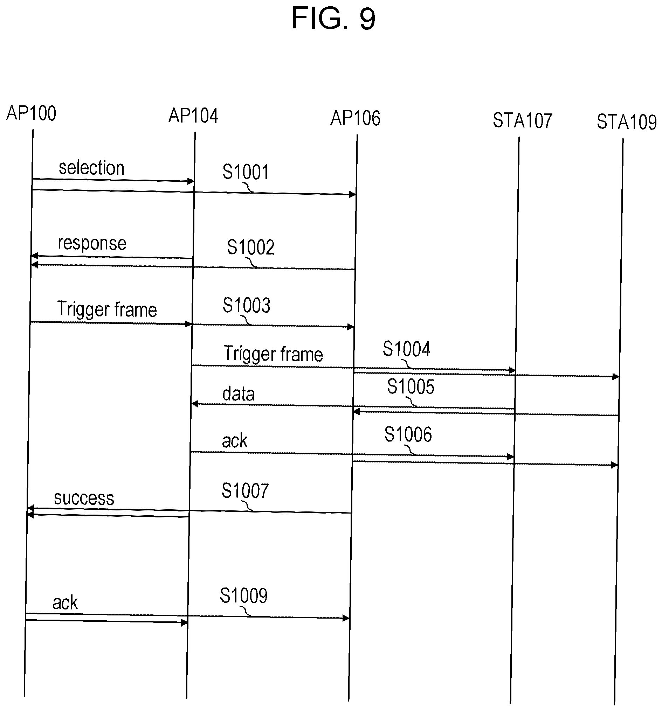

Fig. 9 illustrates a sequence illustrating the process up to the point where the AP 104 and the AP 106, which are Coordinated APs, receive data from the STA 107 and the STA 109 under the instruction of the AP 100, which is the Coordinator AP.

This sequence starts at S806 in Fig. 7 and S905 in Fig. 8. First, a frame for querying whether participation in data reception will be possible is transmitted from the AP 100 to the AP 104 and the AP 106 (S1001). In response to this, the AP 104 and the AP 106, which are Coordinated APs, return responses (S1002). These responses include information as to whether or not participation in data reception will be possible. In a case where participation will be possible, channels available for participation, link numbers, the maximum transmission powers of the STAs, and information regarding the amounts of data to be transmitted that the STAs have accumulated for each type of access category are included. In a case where participation will not be possible, a reason for non-participation may be included. Examples of the reason for non-participation include BUSY and DISCONNECTED. On the basis of these Responses, the AP 100 selects APs that are to participate in data reception and transmits, to the selected APs, a frame that triggers data reception from the STAs (S1003). The AP 104 and AP 106 that have received the trigger frame analyze the content of the frame to determine the transmission powers allocated thereto and to the STAs connected thereto. On the basis of that, trigger frames are transmitted to receive data from the STAs (S1004). In response to receiving the trigger frames, the STA 107 and the STA 109 transmit data at the transmission powers based on the information regarding the trigger frames (S1005). The AP 104 and the AP 106 return Acks associated with the received data (S1006). If all data can be received from the STA 107 and the AP 109, the AP 104 and the AP 106 first transmit, to the AP 100, frames indicating that data reception is complete (S1007). The AP 100 returns Acks in response to the reception completion notifications (S1009).

In this manner, the AP 104 and the AP 106 can specify appropriate transmission powers to the STAs under instructions from the AP 100 and receive data from the STAs. Note that data may be transmitted from the STA 107 to the AP 100, for example. In contrast, for example, the AP 104 may transfer the data received from the STA 107 to the AP 100, and the AP 106 may, by itself, process the data received from the STA 109. In this case, in Fig. 9, the received data is transferred from the AP 104 to the AP 100 also in S1007.

In the present example, the AP 100 and the AP 104 are connected through radio waves, and the AP 100 and the AP 106 are connected in a wired manner. However, the AP 100 may be connected to both the AP 104 and the AP 106, either wirelessly or in a wired manner. The SSIDs and BSSIDs of the AP 100, AP 104, AP 105, and AP 106 operating cooperatively may be the same or different. However, in a case where the BSSIDs are the same, additional IDs are prepared to identify the AP 100 and APs 104 to 106. In this case, the Coordinator AP uniquely manages, in advance, the IDs for identifying the respective APs that are cooperation targets. Each Coordinated AP also acquires its ID in advance and stores it as its own ID so that the Coordinated AP can identify the ID as being addressed thereto.

According to the present example, the AP 105 and the AP 106 can receive data from the STA 107 and the STA 109, respectively, under the respective appropriate transmission powers.

### (Other Embodiments)

A configuration may be obtained by combining Example 1 and Example 2 illustrated above. That is, a configuration may be obtained such that both the configuration in which the Coordinated APs transmit data to the STAs on the basis of instructions from the Coordinator AP and the configuration in which the Coordinated APs receive data from the STAs on the basis of instructions from the Coordinator AP can be realized.

In the present embodiment, only Ack was handled to simplify the description, but other types of Ack, such as BlockAck and Multi-STA BlockAck, are also included.

In the present embodiment, the AP 100 serving as the Coordinator AP does not communicate directly with the STAs, but the AP 100 serving as the Coordinator AP may simultaneously play the role of a Coordinated AP.

In addition, a recording medium on which software program code is recorded to implement the functions described above may be supplied to the system or device, and the computer (a CPU, an MPU) in the system or device may read and execute the program code stored in the recording medium. In this case, the program code itself, which is read from the storage medium, will implement the functions of the embodiment described above, and the storage medium storing the program code will constitute the device described above.

For example, flexible disks, hard disks, optical disks, magneto-optical disks, CD-ROMs, CD-Rs, magnetic tapes, non-volatile memory cards, ROMs, DVDs, etc. can be used as storage media for supplying the program code.

In addition to the above-mentioned functions being implemented by the computer executing the read-out program code, the OS running on the computer may also perform part or all of the actual processing on the basis of the instructions from that program code to implement the above-mentioned functions. OS stands for Operating System.

Furthermore, the program code read from the storage medium is written into a memory provided in a function expansion board inserted in the computer or in the function expansion unit connected to the computer. Then, based on the instructions from that program code, the CPU in the function expansion board or function expansion unit may perform part or all of the actual processing to implement the functions described above.

The present invention can also be realized through processing in which a program that implements one or more functions of the above-mentioned embodiment is supplied to a system or device via a network or storage medium, and one or more processors in a computer of the system or device read and execute the program. The present invention can also be realized by a circuit (for example, an ASIC) that implements one or more functions.

The disclosure of the present embodiments includes the following configurations, methods, and program.

### (Configuration 1)

A communication device that performs wireless communication that complies with IEEE 802.11 series of standards, includes a communication means that cooperates with an access point to perform data communication with a station, and the communication means transmits, to the access point, a frame instructing the access point to communicate with the station, the frame including information for identifying the access point and information regarding transmission power.

### (Configuration 2)

In the communication device according to configuration 1, the information for identifying the access point is a value indicating a BSS Color.

### (Configuration 3)

In the communication device according to configuration 1, the information for identifying the access point is a BSSID.

### (Configuration 4)

In the communication device according to any one of configurations 1 to 3, the information regarding the transmission power is a transmission power value to be used by the access point to transmit data to the station device.

### (Configuration 5)

In the communication device according to any one of configurations 1 to 3, the information regarding the transmission power is a value based on a reception strength of radio waves that the communication device is expected to receive when the access point emits radio waves.

### (Configuration 6)

In the communication device according to any one of configurations 1 to 5, based on the frame, the access point transmits, to the station device, a frame instructing the station to transmit data to the access point.

### (Configuration 7)

In the communication device according to configuration 6, the information regarding the transmission power is a transmission power value to be used by the station device to transmit data to the access point.

### (Configuration 8)

In the communication device according to any one of configurations 1 to 7, access points that perform data communication with the station are selected from among a plurality of access points, and the frame includes, for each selected access point, information for identifying the selected access point and information regarding transmission power corresponding to the selected access point.

### (Configuration 9)

In the communication device according to any one of configurations 1 to 8, the communication device is an access point device, the frame is a trigger frame, and the information for identifying the access point and the information regarding the transmission power are included in a User Info field of the trigger frame.

### (Configuration 10)

A communication device that performs wireless communication that complies with IEEE 802.11 series of standards, includes a communication means that cooperates with an access point to perform data communication with a station, and the communication means receives, from the access point, a frame instructing the communication device to communicate with the station, the frame including information for identifying the communication device and information regarding transmission power.

### (Configuration 11)

In the communication device according to configuration 10, the information for identifying the communication device is a value indicating a BSS Color.

### (Configuration 12)

In the communication device according to configuration 10, the information for identifying the communication device is a BSSID.

### (Configuration 13)

In the communication device according to any one of configurations 10 to 12, the information regarding the transmission power is a transmission power value to be used by the communication device to transmit data to the station.

### (Configuration 14)

In the communication device according to any one of configurations 10 to 12, the information regarding the transmission power is a value based on a reception strength of radio waves that the access point is expected to receive when the communication device emits radio waves.

### (Configuration 15)

In the communication device according to any one of configurations 10 to 14, based on the frame, the communication device transmits, to the station device, a frame instructing the station to transmit data to the communication device.

### (Configuration 16)

In the communication device according to configuration 15, the information regarding the transmission power is a transmission power value to be used by the station device to transmit data to the communication device.

### (Configuration 17)

In the communication device according to any one of configurations 10 to 16, the frame includes, for each selected access point, information for identifying the selected access point and information regarding transmission power corresponding to the selected access point.

### (Configuration 18)

In the communication device according to any one of configurations 10 to 17, the communication device is an access point device, the frame is a trigger frame, and the information for identifying the access point and the information regarding the transmission power are included in a User Info field of the trigger frame.

### (Method 1)

A control method performed by a communication device that performs wireless communication that complies with IEEE 802.11 series of standards, includes
a communication step for cooperating with an access point to perform data communication with a station, and in the communication step, transmitting, to the access point, a frame instructing the access point to communicate with the station, the frame including information for identifying the access point and information regarding transmission power.

### (Method 2)

A control method performed by a communication device that performs wireless communication that complies with IEEE 802.11 series of standards, includes
a communication step for cooperating with an access point to perform data communication with a station, and in the communication step, receiving, from the access point, a frame instructing the communication device to communicate with the station, the frame including information for identifying the communication device and information regarding transmission power.

### (Program)

A program for causing a computer to function as the communication device according to any one of configurations 1 to 18.

The present invention is not limited to the above-mentioned embodiments, and various changes and modifications are possible without departing from the spirit and scope of the present invention. Accordingly, the claims are attached to disclose the scope of the present invention to the public.

This application claims the benefit of Japanese Patent Application No. 2023-026646, filed February 22, 2023, which is hereby incorporated by reference herein in its entirety.

## Claims

1. A communication device that performs wireless communication that complies with IEEE 802.11 series of standards, comprising:
a communication means that cooperates with an access point to perform data communication with a station, wherein the communication means transmits, to the access point, a frame instructing the access point to communicate with the station, the frame including information for identifying the access point and information regarding transmission power.

2. The communication device according to claim 1, wherein the information for identifying the access point is a value indicating a BSS Color.

3. The communication device according to claim 1, wherein the information for identifying the access point is a BSSID.

4. The communication device according to claim 1, wherein the information regarding the transmission power is a transmission power value to be used by the access point to transmit data to the station device.

5. The communication device according to claim 1, wherein the information regarding the transmission power is a value based on a reception strength of radio waves that the communication device is expected to receive when the access point emits radio waves.

6. The communication device according to claim 1, wherein based on the frame, the access point transmits, to the station device, a frame instructing the station to transmit data to the access point.

7. The communication device according to claim 6, wherein the information regarding the transmission power is a transmission power value to be used by the station device to transmit data to the access point.

8. The communication device according to claim 1, wherein access points that perform data communication with the station are selected from among a plurality of access points, and the frame includes, for each selected access point, information for identifying the selected access point and information regarding transmission power corresponding to the selected access point.

9. The communication device according to claim 1, wherein the communication device is an access point device, the frame is a trigger frame, and the information for identifying the access point and the information regarding the transmission power are included in a User Info field of the trigger frame.

10. A communication device that performs wireless communication that complies with IEEE 802.11 series of standards, comprising:
a communication means that cooperates with an access point to perform data communication with a station, wherein the communication means receives, from the access point, a frame instructing the communication device to communicate with the station, the frame including information for identifying the communication device and information regarding transmission power.

11. The communication device according to claim 10, wherein the information for identifying the communication device is a value indicating a BSS Color.

12. The communication device according to claim 10, wherein the information for identifying the communication device is a BSSID.

13. The communication device according to claim 10, wherein the information regarding the transmission power is a transmission power value to be used by the communication device to transmit data to the station.

14. The communication device according to claim 10, wherein the information regarding the transmission power is a value based on a reception strength of radio waves that the access point is expected to receive when the communication device emits radio waves.

15. The communication device according to claim 10, wherein based on the frame, the communication device transmits, to the station device, a frame instructing the station to transmit data to the communication device.

16. The communication device according to claim 15, wherein the information regarding the transmission power is a transmission power value to be used by the station device to transmit data to the communication device.

17. The communication device according to claim 10, wherein the frame includes, for each selected access point, information for identifying the selected access point and information regarding transmission power corresponding to the selected access point.

18. The communication device according to claim 10, wherein the communication device is an access point device, the frame is a trigger frame, and the information for identifying the access point and the information regarding the transmission power are included in a User Info field of the trigger frame.

19. A control method performed by a communication device that performs wireless communication that complies with IEEE 802.11 series of standards, comprising:
a communication step for cooperating with an access point to perform data communication with a station, wherein in the communication step, transmitting, to the access point, a frame instructing the access point to communicate with the station, the frame including information for identifying the access point and information regarding transmission power.

20. A control method performed by a communication device that performs wireless communication that complies with IEEE 802.11 series of standards, comprising:
a communication step for cooperating with an access point to perform data communication with a station, wherein in the communication step, receiving, from the access point, a frame instructing the communication device to communicate with the station, the frame including information for identifying the communication device and information regarding transmission power.

21. A program for causing a computer to function as the communication device according to any one of configurations of claims 1 to 18.
